# EUROPÄISCHE PATENTSCHRIFT

(11) **EP 4 126 570 B1**
(45) Veröffentlichungstag und Bekanntmachung des Hinweises auf die Patenterteilung: **18.10.2023**
(21) Anmeldenummer: 21713901.3
(22) Anmeldetag: 17.03.2021
(51) Int. Cl.: B60D 1/64, B62D 53/12

(54) **PRIMÄRKOPPLUNGSVORRICHTUNG, SEKUNDÄRKOPPLUNGSVORRICHTUNG, SATTELKUPPLUNGSANORDNUNG UND AUTOMATISCHES KUPPLUNGSSYSTEM**
PRIMARY COUPLING APPARATUS, SECONDARY COUPLING APPARATUS, FIFTH-WHEEL COUPLING ARRANGEMENT AND AUTOMATIC COUPLING SYSTEM
APPAREIL DE COUPLAGE PRIMAIRE, APPAREIL DE COUPLAGE SECONDAIRE, AGENCEMENT DE COUPLAGE DE CINQUIÈME ROUE ET SYSTÈME DE COUPLAGE AUTOMATIQUE

(30) Priorität: 24.03.2020 DE 102020108004
(43) Veröffentlichungstag der Anmeldung: 08.02.2023
(73) Patentinhaber: SAF-HOLLAND GmbH, 63856 Bessenbach (DE)
(72) Erfinder: KÖSTER, Mario Sebastian, 78351 Bodman-Ludwigshafen (DE); KÜBLER, Randy, 78244 Gottmadingen (DE)
(74) Vertreter: Müller Schupfner & Partner Patent- und Rechtsanwaltspartnerschaft mbB
(86) Internationale Anmeldenummer: PCT/EP2021/056761
(87) Internationale Veröffentlichungsnummer: WO 2021/191008

(56) Entgegenhaltungen:
- DE-A1- 10 155 056
- DE-A1-102015 226 094
- GB-A- 835 653
- US-A- 4 156 551

## Beschreibung

Die Erfindung betrifft eine Sattelkupplungsanordnung und ein automatisches Kupplungssystem für ein Nutzfahrzeug.

Automatische Kupplungssysteme sind bereits aus dem Stand der Technik bekannt, diese dienen dazu, einen Energiefluss zwischen einem Zugfahrzeug und einem Auflieger oder Anhänger zu realisieren. Diese automatischen Kupplungssysteme verfügen meist auf der Zugfahrzeugseite über einen Stecker und auf der Anhängerseite über eine Steckdose. Teilweise verfügen der Stecker und die Steckdose auch über verschiebliche abdeckende Elemente, um ein Eingreifen in den Stecker oder die Steckdose vor dem Ankuppeln zu verhindern und diese vor Umwelteinflüssen zu schützen. Durch das Annähern des Zugfahrzeugs relativ zum Anhänger - während des Ankuppelvorgangs - werden die Steckdose und der Stecker zueinander ausgerichtet, die verschieblichen abdeckenden Elemente verschoben und der Stecker und die Steckdose miteinander verbunden, sodass Energie, insbesondere ein Strom, vom Zugfahrzeug auf den Anhänger fließen kann. Dieser Prozess des automatischen Koppelns der Steckdose und des Steckers aufgrund der Annäherung des Zugfahrzeugs an den Anhänger ist jedoch aufgrund der hohen Kontaktkräfte zwischen dem Stecker und der Steckdose relativ anfällig und führt häufig zu Beschädigungen, insbesondere bei den abdeckenden Elementen des Steckers.

Die US 4,156,551 zeigt ein Verbindungsmittel für Fahrzeuge, wobei die Fahrzeuge schienengebundene Fahrzeuge, Traktoren und Anhänger und ähnliche inkludieren können, zum automatischen Verbinden von fluidtragenden Leitungen und elektrischen Verbindungen, wenn die ziehenden oder gezogenen Fahrzeuge verbunden sind.

Die DE 10 2015 226 049 A1 betrifft ein Kupplungsbauteil einer Kupplungsvorrichtung zum vorübergehenden Verbinden eines Zugfahrzeugs mit einem Nachlauffahrzeug zur Bildung eines Fahrzeugzuges, wobei die Vorrichtung zumindest einen Kupplungsbau-teilkörper mit einem an diesem vorgesehenen Kupplungsglied zur Herstellung eines Kupplungsverbindungseingriffs mit einem Kupplungsglied des weiteren Kupplungsbau-teils aufweist und ein Steckerbauteil mit wenigstens einer Steckerformation vorhanden ist. Die DE 101 55 056 A1 offenbart eine gattungsgemäße Sattelkupplungsanordnung.

Es ist daher Aufgabe der vorliegenden Erfindung, die Kontaktkraft beim Ankuppelvorgang zu reduzieren und um gleichzeitig den Steckverbinder vor Verschmutzungen zu schützen.

Diese Aufgabe wird durch eine Sattelkupplungsanordnung gemäß dem Anspruch 1 und durch ein automatisches Kupplungssystem gemäß dem Anspruch 11 gelöst.

Die Erfindung betrifft eine Sattelkupplungsanordnung umfassend eine Primärkopplungsvorrichtung und eine Sattelkupplungsplatte,wobei die Sattelkupplungsplatte eine Aufliegerfläche aufweist, wobei die Aufliegerfläche eine nach außen weisende Normale aufweist,wobei die Sattelkupplungsplatte eine Einfahröffnung aufweist,wobei die Einfahröffnung sich in eine Einfahrrichtung erstreckt, wobei die Primärkopplungsvorrichtung einen Grundkörper, einen Antrieb, einen Koppelmechanismus, eine Abdeckvorrichtung und ein Steckerelement umfasst, wobei der Grundkörper dazu ausgelegt ist, an der Sattelkupplungsanordnung und/oder dem Anhänger festgelegt zu sein, wobei das Steckerelement Energieleitkontakte aufweist, welche insbesondere in eine Steckrichtung weisen, wobei der Antrieb über den Koppelmechanismus mit der Abdeckvorrichtung mechanisch verbunden ist, wobei die Abdeckvorrichtung zumindest ein Abdeckelement aufweist, wobei das Abdeckelement durch den Antrieb zwischen einer ersten Stellung und einer zweiten Stellung verlagerbar ist, wobei in der ersten Stellung des Abdeckelements das Steckerelement freigegeben ist, und wobei in der zweiten Stellung das Abdeckelement des Steckerelements abgedeckt ist. Die Primärkopplungsvorrichtung ist insbesondere eine Primärkopplungsvorrichtung für ein Nutzfahrzeug. Ein Nutzfahrzeug im Sinne der Erfindung ist insbesondere ein straßentaugliches Fahrzeug mit einem zulässigen Gesamtgewicht von mindestens 3,51 Tonnen, bevorzugt von mindestens 7,51 Tonnen und besonders bevorzugt von mindestens 15,01 Tonnen. In anderen Worten kann die Primärkopplungsvorrichtung Teil eines automatischen Kupplungssystems sein, welches dazu dient, ein Anhängerfahrzeug energietechnisch und/oder informationstechnisch automatisch mit einem Zugfahrzeug zu verbinden. Die erfindungsgemäße Primärkopplungsvorrichtung ist dabei derjenige Anteil des automatischen Kupplungssystems, welcher an der Sattelkupplungsanordnung angeordnet ist.

Die Primärkopplungsvorrichtung der erfindungsgemäßen Sattelkupplungsanordnung umfasst einen Grundkörper, einen Antrieb, ein Koppelmechanismus, eine Abdeckvorrichtung und ein Steckerelement. Der Grundkörper dient dazu, an der Sattelkupplungsanordnung oder dem Anhänger festgelegt zu sein. Der Grundkörper kann beispielsweise reversibel, insbesondere mittels Schrauben, festgelegt sein, sodass dieser in einfacher Weise ausgetauscht werden kann. Beispielsweise kann der Grundkörper, wenn dieser an der Sattelkupplungsanordnung festgelegt ist, an der Sattelkupplungsplatte angeordnet sein. Bevorzugt ist der Grundkörper unterhalb der Einfahröffnung der Sattelkupplungsplatte angeordnet. Die Einfahröffnung der Sattelkupplungsplatte ist diejenige Öffnung, in welche der anzukuppelnde bzw. einzukuppelnde Königszapfen eingeführt wird, wenn dieser von einer entkoppelten Stellung in die eingekuppelte Stellung verlagert wird. Die Einfahröffnung erstreckt sich dabei insbesondere in eine Einfahrrichtung. Diese Einfahrrichtung ist insbesondere diejenige Richtung, in welche der Königszapfen sich relativ zur Sattelkupplungsplatte bei einem Einkuppeln des Königszapfens bewegt. Beispielsweise ist die Einfahröffnung diejenige Öffnung der Sattelkupplungsplatte, in welche der Königszapfen eingeführt wird um ein Einkuppeln des Königszapfens zu erreichen. Vorteilhafterweise wird die Einfahröffnung durch einen Raum zwischen den Kupplungshörnern der Sattelkupplungsplatte definiert/ausgebildet. Erfindungsgemäß ist dabei die Steckrichtung zumindest im Wesentlichen parallel zur Einfahrrichtung, um eine besonders kompakte und betriebssichere Primärkoppelvorrichtung zu erreichen. Unter einem im Wesentlichen parallel ist dabei zu verstehen, dass der kleinste zwischen den beiden im Wesentlichen parallelen Richtungen eingeschlossene Winkel maximal 10°, bevorzugt maximal 5° und besonders bevorzugt maximal 1 ° beträgt. Besonders stark bevorzugt ist es jedoch, wenn die im Wesentlichen parallelen Richtungen genau parallel sind. Der Grundkörper der Primärkopplungsvorrichtung kann insbesondere als ein Blechteil ausgestaltet sein, denn hierdurch können Fertigungskosten gespart werden. Neben dem Grundkörper verfügt die Primärkopplungsvorrichtung auch über ein Steckerelement. Das Steckerelement dient dazu, mit einem korrespondierend ausgebildeten Element, insbesondere mit einem Steckverbinder einer Sekundärkopplungsvorrichtung, verbindbar und/oder verbunden zu sein, sodass elektrische Signale und/oder Informationen und/oder Energie zwischen dem Steckerelement und dem korrespondierend ausgebildeten Element übertragen werden können. In anderen Worten kann dies bedeuten, dass das Steckerelement mit beispielsweise einem Steckverbinder einer Sekundärkopplungsvorrichtung ein automatisches Kupplungssystem ausbilden kann, sodass insbesondere elektrische Signale und/oder Energie und/oder Informationen zwischen einem Zugfahrzeug und einem Anhänger übertragen werden können. Für die Informations- und/oder Energieübertragung verfügt das Steckerelement insbesondere über hydraulische und/oder pneumatische und/oder elektrische Energieleitkontakte, wobei diese Energieleitkontakte insbesondere dazu ausgelegt sind, mit korrespondierenden Kontakten eines Steckverbinders einer Sekundärkopplungsvorrichtung verbindbar und/oder verbunden zu sein. Vorteilhafterweise erstrecken sich die Energieleitkontakte des Steckerelements in die Steckrichtung. Vorteilhafterweise ist diese Steckrichtung dabei diejenige Richtung, in welche sich das Steckerelement - theoretisch - relativ zum Steckverbinder bewegen muss, um eine Steckverbindung zu realisieren. Um die Energieleitkontakte gegen Umwelteinflüsse zu schützen, verfügt die Primärkopplungsvorrichtung über eine Abdeckvorrichtung, welche zumindest ein Abdeckelement aufweist. Das Abdeckelement kann dabei eine Klappe oder ein Fallmechanismus oder ein Klappmechanismus sein oder eine lamellenartige Abdeckeinheit, in anderen Worten kann das Abdeckelement ein oder mehrstückig ausgebildet sein. Das Abdeckelement der Abdeckvorrichtung ist dabei durch den Antrieb zwischen einer ersten Stellung und einer zweiten Stellung verlagerbar, wobei in der ersten Stellung des Abdeckelements das Steckerelement freigegeben ist. In anderen Worten kann dies bedeuten, dass in der ersten Stellung ein Einstecken eines Steckverbinders in das Steckerelement bzw. eine Steckverbindung zwischen dem Steckerelement und dem Steckverbinder einer Sekundärkopplungsvorrichtung möglich ist. In der zweiten Stellung ist das Abdeckelement derart positioniert, dass das Steckerelement abgedeckt ist. In anderen Worten kann dies bedeuten, dass in der zweiten Stellung das Abdeckelement derart positioniert ist, dass ein Steckverbinder einer Sekundärkopplungsvorrichtung nicht mit dem Steckerelement stecktechnisch verbunden werden kann. Um das Abdeckelement der Abdeckvorrichtung von der ersten Stellung in die zweite Stellung und/oder von der zweiten Stellung in die erste Stellung zu verlagern, verfügt die Primärkopplungsvorrichtung über einen Antrieb und einen Koppelmechanismus. Der Antrieb kann dabei beispielsweise ein linearantrieb, ein hydraulischer oder ein pneumatischer Antrieb, insbesondere ein Zylinder sein. Alternativ bevorzugt kann es sich bei diesem Antrieb auch um einen Elektromotor handeln. Dieser Antrieb ist über den Koppelmechanismus mit der Abdeckvorrichtung mechanisch verbunden, so dass mechanische Energie von dem Antrieb über den Koppelmechanismus auf die Abdeckvorrichtung übertragbar ist. Wobei durch diese mechanische Energie das Abdeckelement der Abdeckvorrichtung von der ersten in die zweite Stellung und/oder von der zweiten Stellung in die erste Stellung verlagert wird bzw. verlagert werden kann. Beispielsweise kann der Koppelmechanismus bei der Ausbildung des Antriebs als ein hydraulischer oder pneumatischer Zylinder eine Kolbenstange und/oder eine Kolbenstangenverlängerung sein. Insbesondere kann der Koppelmechanismus dabei einteilig oder mehrteilig ausgebildet sein. Bei einer einteiligen Ausbildung des Koppelmechanismus, insbesondere in Form einer Kolbenstange, resultiert eine besonders mechanisch belastbare Vorrichtung. Bei einer mehrteiligen Ausbildung des Koppelmechanismus kann ein gewisser Ausgleich sowie eine gewisse Dämpfungswirkung erreicht werden, so dass die Vorrichtung sowohl gewisse Toleranzen ausgleichen kann und/oder dazu in der Lage ist, ein hohes Maß an Dämpfung bereitzustellen. Durch die erfindungsgemäße Ausgestaltung der Primärkopplungsvorrichtung wird erreicht, dass durch die Verlagerung des Abdeckelements - durch den Antrieb - die Kontaktkräfte während des Einkuppelns deutlich reduziert werden. Hierdurch können insbesondere Beschädigungen an der Primärkopplungsvorrichtung, insbesondere an der Abdeckvorrichtung, verhindert werden.

Zweckmäßigerweise ist die Primärkopplungsvorrichtung derart ausgestaltet, dass das Abdeckelement mittelbar durch den Antrieb verlagerbar ist. Insbesondere derart, dass der Antrieb derart ausgestaltet ist, dass dieser das Steckerelement bei einer Betätigung verlagert und das Steckerelement die Abdeckvorrichtung verlagert bzw. verschiebt. In anderen Worten kann die Primärkopplungsvorrichtung daher derart gestaltet sein, dass der Antrieb nicht direkt das Abdeckelement verlagert sondern vielmehr nur mittelbar, insbesondere über das Steckerelement. Hierdurch kann insbesondere ein separater Antrieb für das Steckerelement eingespart werden, sodass eine kostengünstige und bauraumsparende sowie leichte Primärkopplungsvorrichtung erreicht wird.

Vorteilhafterweise weist der Antrieb einen Energieanschluss auf. Ein solcher Energieanschluss kann beispielsweise ein Strom-, ein Öl- und/oder ein Luftdruckanschluss sein. Durch das Vorsehen des Energieanschlusses ist es möglich, gezielt ein Betätigen des Antriebs herbeizuführen, um eine Verlagerung des Abdeckelements von der ersten Stellen in die zweite Stellung oder umgekehrt zu erreichen und/oder um das Steckerelement relativ zum Grundkörper, insbesondere in die Steckrichtung, zu verlagern. Des Weiteren wird hierdurch vermieden, dass der Antrieb einen eigenen schweren Energiespeicher aufweisen muss, sodass Bauraum und Gewicht gespart werden kann.

Bevorzugt ist der Antrieb ein pneumatischer, ein elektrischer oder ein hydraulischer Antrieb. Durch das Ausbilden des Antriebs als ein hydraulischer Antrieb wird erreicht, dass auch große Kräfte ausgeübt werden können. Bei der Ausgestaltung des Antriebs als ein pneumatischer Antrieb kann erreicht werden, dass insbesondere auch bei Leckagen keine Umweltverschmutzung stattfindet. Darüber hinaus hat das Ausbilden des Antriebs als ein pneumatischer Antrieb auch noch den Vorteil, dass insbesondere vorhandene (Versorgungs-)Systeme des Nutzfahrzeugs (Zugfahrzeug oder Anhänger) genutzt werden können, um den Antrieb zu betreiben. Das Vorsehen eines hydraulischen oder eines pneumatischen Antriebs hat darüber hinaus auch noch den weiteren Vorteil, dass aufgrund der Kompressibilität der Arbeitsmedien dem Antrieb eine gewisse Federsteifigkeit verliehen werden kann, sodass hierdurch eine Überbelastung des Antriebs und/oder des Grundkörpers und/oder des Steckerelements durch die Federsteifigkeit des Arbeitsfluids verhindert werden kann. Die Verwendung eines elektrischen Antriebs ermöglicht ebenfalls die Nutzung von Energiequellen, wie z.B. Batterien, des Anhängers oder des Zugfahrzeugs, um ein Betreiben des Antriebs zu erreichen. Hierdurch resultiert ein besonders kostengünstiges System, denn die Energieversorgung des Antriebs kann besonders einfach nachgerüstet und/oder ausgestaltet werden.

In einer bevorzugten Ausführungsform ist der Antrieb ein Druckluftzylinder. Durch das Ausbilden als ein Druckluftzylinder resultiert eine besonders bauraumsparende Primärkopplungsvorrichtung, welche darüber hinaus auch noch in Hinblick auf eine Umweltbelastung leckage-unanfällig ist. Zusätzlich ermöglicht der Einsatz eines Druckluftzylinders, dass ein besonders schnelles Verlagern von der ersten in die zweite Stellung möglich ist und dass bereits vorhandene Systeme zum Betreiben bzw. zum Versorgen des Antriebs eingesetzt werden können, wie z. B. Kompressoren und/oder Drucklufttanks des Zugfahrzeugs oder des Anhängers.

Vorteilhafterweise weist die Primärkopplungsvorrichtung einen zweiten Antrieb auf. Die Verwendung eines zweiten Antriebs kann beispielsweise dazu dienen, ein redundantes System bereitzustellen, sodass auch beim Ausfall eines Antriebs weiter eine sichere Verlagerung des Abdeckelements von der ersten Stellung in die zweite Stellung stattfinden kann.

Bevorzugt umfasst das Steckerelement hydraulische und/oder pneumatische und/oder elektrische Energieleitkontakte, wobei die Energieleitkontakte dazu ausgelegt sind, mit korrespondierenden Kontakten eines Steckverbinder einer Sekundärkopplungsvorrichtung verbindbar und/oder verbunden zu sein, wobei die Energieleitkontakte sich bevorzugt in die Steckrichtung erstrecken. Das Steckerelement umfasst daher in anderen Worten hydraulische und/oder pneumatische und/oder elektrische Kontakte, welche mit korrespondierenden Kontakten eines Steckverbindes einer Sekundärkopplungsvorrichtung derart zusammenwirken und/oder verbunden werden können, sodass Energie und/oder Informationen in Form von elektrischer, pneumatischer und/oder hydraulischer Energie vom Steckerelement auf die Steckverbinder und damit in einer späteren Einbauposition vom Anhänger auf das Zugfahrzeug oder vom Zugfahrzeug auf den Anhänger übertragen werden können. Die Sekundärkopplungsvorrichtung mit ihrem Steckverbinder bildet daher in anderen Worten ein automatisches Steckverbindungssystem eines automatischen Kupplungssystems mit der Primärkopplungsvorrichtung aus, wobei die Primärkopplungsvorrichtung am Anhänger oder am Zugfahrzeug angeordnet ist und die Sekundärkopplungsvorrichtung entsprechend am Zugfahrzeug oder am Anhänger.

Vorteilhafterweise ist das Steckerelement relativ zum Grundkörper mittels des Antriebs, insbesondere in die Steckrichtung, verlagerbar. Durch die Möglichkeit das Steckerelement relativ zum Grundkörper mittels des Antriebs verlagern zu können, wird erreicht, dass das eigentliche Einstecken bzw. das Verkuppeln des Steckerelements mit einem Steckverbinder einer Sekundärkopplungsvorrichtung unabhängig von dem eigentlichen Einkuppelvorgang des Anhängers mit dem Zugfahrzeugs erfolgen kann und auch ein nur geringer Bauraum benötigt wird.

Vorteilhafterweise ist der Koppelmechanismus durch den Antrieb in Steckrichtung lagerbar. Hierdurch kann eine besonders leichte und kompakte Betätigung der Abdeckvorrichtung erfolgen. Beispielsweise kann dies dadurch erreicht werden, dass der Antrieb als ein Zylinder ausgebildet ist, insbesondere als ein doppelt wirkender Zylinder, und der Koppelmechanismus einen Teil der Kolbenstange des Zylinders bildet oder eine Kolbenstangenverlängerung. Der Koppelmechanismus kann dabei insbesondere den Antrieb mit einer Verlagerungsvorrichtung der Abdeckvorrichtung mechanisch verbinden. Unter "mechanisch verbinden" ist dabei insbesondere zu verstehen, dass mechanische Energie von dem Antrieb über den Koppelmechanismus zu der Abdeckvorrichtung übertragen wird.

Zweckmäßigerweise ist die Primärkopplungsvorrichtung derart ausgebildet, dass das Abdeckelement in der ersten Stellung relativ zu der Position des Abdeckelements in der zweiten Stellung zumindest teilweise in eine Höhenrichtung verlagert ist, wobei die Höhenrichtung im Wesentlichen senkrecht auf der Steckrichtung steht. Unter einer zumindest teilweisen Verlagerung in Höhenrichtung kann dabei verstanden werden, dass das Abdeckelement von der ersten Stellung relativ zur zweiten Stellung zumindest teilweise in eine Höhenrichtung verlagert werden muss. Insbesondere ist diesbezüglich der Schwerpunkt des Abdeckelements maßgeblich. Beispielsweise kann eine derartige Verlagerung des Abdeckelements von der ersten Stellung relativ zur zweiten Stellung in Höhenrichtung durch eine Rotation des Abdeckelements und/oder durch eine translatorische Bewegung des Abdeckelements erreicht werden, wobei der Schwerpunkt des Abdeckelements in der ersten Stellung relativ zur zweiten Stellung zumindest eine Verlagerungskomponente aufweisen muss, welche einen Anteil in Höhenrichtung hat. Daher ist insbesondere keine Verlagerung des Abdeckelements "zumindest teilweise in eine Höhenrichtung" gegeben, wenn das Abdeckelement lediglich in die Steckrichtung verlagert wird. Die Höhenrichtung steht insbesondere im Wesentlichen senkrecht auf der Steckrichtung. Unter "im Wesentlichen senkrecht" ist dabei zu verstehen, dass der kleinere eingeschlossene Winkel zwischen der Höhenrichtung und der Steckrichtung zwischen 80° und 90° liegt, bevorzugt zwischen 85° und 90° und besonders bevorzugt zwischen 88° und 90° liegt. Durch die Verlagerbarkeit des Abdeckelements von der ersten Stellung relativ zur zweiten Stellung - zumindest teilweise in die Höhenrichtung - kann eine besonders kompakte Primärkopplungsvorrichtung in Steckrichtung erreicht werden.

Vorteilhafterweise weist die Abdeckvorrichtung mehrere Abdeckelemente, insbesondere zwei Abdeckelemente, auf. In anderen Worten kann dies bedeuten, dass die Abdeckvorrichtung nicht nur ein Abdeckelement, sondern eine Vielzahl von Abdeckelementen aufweist. Die Abdeckelemente können dabei insbesondere als Klappen, Lamellenkonstruktionen oder andere Verschlussmittel ausgebildet sein. Durch das Vorsehen von mehreren Abdeckelementen kann der Verfahrweg der einzelnen Abdeckelemente reduziert werden, so dass ein besonders schnelles Überführen der Abdeckelemente von deren jeweiligen ersten Stellung in deren jeweilige zweite Stellung möglich ist. Vorteilhafterweise sind die mehreren Abdeckelemente derart ausgebildet, dass in dem ersten Zustand die Abdeckelemente sich nicht kontaktieren und in dem zweiten Zustand sich gegenseitig kontaktieren. Insbesondere kann dies beispielsweise dadurch erreicht werden, dass die Abdeckelemente bei der Überführung von der ersten Stellung in die zweite Stellung aufeinander zufahren. Bei der Verwendung von zwei Abdeckelementen ist es besonders bauraumsparend, wenn die Abdeckelemente derart angeordnet sind, dass der Schwerpunkt des ersten Abdeckelements sich von dem ersten Zustand in den zweiten Zustand in die positive Höhenrichtung bewegt und der Schwerpunkt des zweiten Abdeckelements sich vom ersten Zustand in den zweiten Zustand in die negative Höhenrichtung bewegt. Eine besonders kompakte und einfache Ausgestaltung der Abdeckelemente ergibt sich, wenn das erste und das zweite Abdeckelement einen Maulklappenmechanismus miteinander bilden. Ein derartiger Maulklappenmechanismus ist insbesondere dadurch gekennzeichnet, dass die dabei vorgesehenen Abdeckelemente relativ zueinander, insbesondere um eine gemeinsame Schwenkachse, schwenkbar zueinander sind und - ähnlich wie der Oberkiefer und Unterkiefer - maulähnlich geöffnet und geschlossen werden können.

Zweckmäßigerweise weist die Abdeckvorrichtung, insbesondere das Abdeckelement oder die Abdeckelemente, eine Dichtung, insbesondere eine Dichtlippe auf. Durch das Vorsehen einer Dichtung oder einer Dichtlippe kann ein besonders guter Schutz gegen Umwelteinflüsse wie z.B. Regen oder Sturm sowie gegen einen Wasserstrahl eines Hochdruckreinigers erreicht werden. Die Dichtung ist dabei insbesondere derart an dem Abdeckelement angeordnet, dass die Dichtung in der ersten Stellung lediglich mit dem Abdeckelement kontaktiert und wobei die Dichtung in der zweiten Stellung mit einem weiteren Element, insbesondere einem weiteren Teil der Abdeckvorrichtung, kontaktiert. In anderen Worten kann dies bedeuten, dass die Dichtung insbesondere derart angeordnet ist, dass diese in der freigegebenen Stelle kontaktlos ist und in der abdeckenden Stellung kontaktierend ist.

Vorteilhafterweise weist die Abdeckvorrichtung eine Verlagerungsvorrichtung auf, insbesondere eine Spreizvorrichtung oder ein Scherengelenk. Eine Verlagerungsvorrichtung ist dabei eine Vorrichtung, durch die insbesondere die von dem Koppelmechanismus übertragene mechanische Energie von dem Antrieb auf die Abdeckvorrichtung übertragen wird. Beispielsweise kann diese Verlagerungsvorrichtung eine Spreizvorrichtung sein, wie eine Linearführung oder eine Führungskullise oder ein Scherengelenk. Ein Scherengelenk zeichnet sich insbesondere durch zwei verschiedene Schenkel aus, welche an einem gemeinsamen Punkt rotatorisch zueinander gelagert sind, ähnlich wie bei einer Schere.

In einer vorteilhaften Ausführungsform ist die Verlagerungsvorrichtung, insbesondere das Scherengelenk, mittel- und/oder unmittelbar mit dem Koppelmechanismus verbunden oder kontaktiert diesen. Durch die direkte und/oder mittel- oder unmittelbare Verbindung des Koppelmechanismus mit der Verlagerungsvorrichtung, insbesondere mit dem Scherengelenk, resultiert ein besonders kompakter Öffnungs- bzw. Überführungsmechanismus der Abdeckelemente von der ersten Stellung in die zweite Stellung. Besonders vorteilhaft ist es dabei, wenn die Verlagerungsvorrichtung, insbesondere das Scherengelenk, einen Anschlag für den Koppelmechanismus ausbildet. In anderen Worten kann die maximale Verlagerbarkeit des Koppelmechanismus durch die Verlagerungsvorrichtung begrenzt werden. Hierdurch kann in besonders kompakter Weise der maximale Verfahrweg des Koppelmechanismus begrenzt werden.

Zweckmäßigerweise ist zumindest ein Abdeckelement, bevorzugt alle Abdeckelemente, der Abdeckvorrichtung um eine Drehachse rotierbar gelagert, wobei die Drehachse vorteilhafterweise im Wesentlichen senkrecht auf der Steckrichtung und/oder auf der Höhenrichtung steht. In anderen Worten kann dies bedeuten, dass zumindest ein Abdeckelement um eine Drehachse rotierbar gelagert ist. Beispielsweise kann das Abdeckelement dabei als eine rotierbare Klappe um diese Drehachse ausgebildet sein. Um eine Bewegung bzw. eine mechanische Energie von dem Antrieb auf das Abdeckelement zu übertragen und eine rotierbare Verlagerung des Abdeckelements zu erreichen, wird insbesondere der Koppelmechanismus und die Verlagerungsvorrichtung eingesetzt, um die mechanische Energie von dem Antrieb auf das Abdeckelement zu übertragen. Die Drehachse steht vorteilhafterweise zumindest im Wesentlichen senkrecht auf der Steckrichtung und/oder der Höhenrichtung. Hierdurch kann eine besonders kompakte Bauweise der Primärkopplungsvorrichtung erreicht werden.

Vorteilhafterweise ist das Steckerelement um eine Rotationsachse rotierbar gelagert, wobei die Rotationsachse insbesondere der Drehachse entspricht. Durch die Rotationsfähigkeit des Steckerelements um eine Rotationsachse kann eine besonders effektive Möglichkeit bereitgestellt werden, gewisse Lagetoleranzen bzw. Versätze ausgleichen zu können, insbesondere in Relation zu einer Sekundärkopplungsvorrichtung. Daher können hierdurch die auftretenden Kräfte bei dem Einkoppelvorgang der Primärkopplungsvorrichtung relativ zur Sekundärkopplungsvorrichtung reduziert werden und/oder Beschädigungen vermieden oder zumindest reduziert werden. Vorteilhafterweise ist das Steckerelement dabei über zentrierende Vorspannmittel, wie zum Beispiel Federn, in einer zentrierenden Lage vorgespannt. In anderen Worten kann dies bedeuten, dass das Steckerelement zwar um eine Rotationsachse rotierbar gelagert ist, dass jedoch durch die Vorspannmittel das Steckerelement in einer Zentrallage zentrierend durch diese Vorspannmittel gehalten ist. Bei einer Übereinstimmung der Rotationsachse und der Drehachse kann eine besonders bauraumsparende Lagerung des Steckerelements und der Abdeckvorrichtung vorgenommen werden, da diese Rotationsachse und die Drehachse als eine gemeinsame Rotationslagerungsachse sowohl für das Steckerelement selbst als auch für die Abdeckelemente in Relation zu dem Steckerelement dienen können.

Vorteilhafterweise ist zumindest ein Abdeckelement, bevorzugt alle Abdeckelemente, durch ein Vorspannmittel, insbesondere ein Spannband und/oder ein Federelement, in die erste und/oder in die zweite Stellung vorgespannt. Hierdurch wird der Vorteil erreicht, dass zumindest ein Abdeckelement, bevorzugt alle Abdeckelemente, sich in einem definierten Zustand befinden, auch dann wenn ein Ausfall des Antriebs erfolgt. Beispielsweise können diese Abdeckelemente dabei relativ zueinander durch die Vorspannmittel vorgespannt sein. In anderen Worten kann dies bedeuten, dass bei mehreren Abdeckelementen die Vorspannmittel die Abdeckelemente relativ zueinander vorspannen. Beispielsweise kann dies dadurch erreicht werden, dass zwei Abdeckelemente über ein Spannband oder eine Feder mechanisch miteinander verbunden sind. Besonders vorteilhaft ist es, wenn das Abdeckelement bzw. die Abdeckelemente über die Vorspannmittel in die zweite Stellung vorgespannt sind. Hierdurch kann insbesondere erreicht werden, dass bei einem Ausfall des Antriebs weiterhin die Energieleitkontakte des Steckerelements gegen Umwelteinflüsse geschützt sind. Alternativ bevorzugt kann das Abdeckelement auch in die erste Stellung vorgespannt sein. In anderen Worten kann dies bedeuten, dass die Vorspannmittel derart ausgebildet bzw. angeordnet sind, dass das Abdeckelement durch die in den Vorspannmitteln gespeicherte mechanische Energie diese versucht in die erste Stellung zu überführen. Hierdurch kann unter anderem erreicht werden, dass Energie eingespart werden kann, denn dies erlaubt das Abschalten des Antriebs in der ersten Stellung, wenn die Primärkopplungsvorrichtung mit der Sekundärkopplungsvorrichtung verkuppelt ist.

Zweckmäßigerweise weist die Primärkopplungsvorrichtung, insbesondere das Steckerelement, einen Aktivator und/oder einen Führungsdorn auf, der sowohl in der ersten Stellung als auch in der zweiten Stellung in Steckrichtung über zumindest ein Abdeckelement, bevorzugt über alle Abdeckelemente, hinaus steht. Unter einem Hinausstehen des Aktivators und des Führungsdorns kann dabei unter anderem verstanden werden, dass in Steckrichtung, insbesondere weg vom Abdeckelement, der Aktivator und/oder der Führungsdorn das Abdeckelement überragt. Hierdurch wird erreicht, dass der Aktivator und/oder der Führungsdorn dauerhaft in der Lage ist, mit anderen Elementen - unabhängig von der Stellung des Abdeckelements in der ersten Stellung oder der zweiten Stellung - interagieren zu können. Die Führungsdorne sind beispielsweise dazu ausgelegt, in Führungsausnehmungen eingreifen zu können, um so eine Ausrichtung der Primärkopplungsvorrichtung relativ zu der Sekundärkopplungsvorrichtung vorzunehmen. Der Aktivator hingegen ist ein Element, welches dazu dient, ein Verdeckelement einer Sekundärkopplungsvorrichtung von einer verdeckenden in eine öffnende bzw. geöffnete Stellung zu verlagern, insbesondere dadurch, dass der Aktivator mit einem Stellstück der Sekundärkopplungsvorrichtung interagiert.

Vorteilhafterweise ist das Steckerelement derart gelagert, dass das Steckerelement in drei relativ zueinander senkrecht stehenden Achsen translatorisch verschiebbar zu dem Koppelmechanismus oder einem Teil des Koppelmechanismus ist, insbesondere in maximal +/- 0,5 mm und/oder wobei das Steckerelement derart gelagert ist, dass das Steckerelement in drei relativ zueinander senkrecht stehenden Achsen rotatorisch gegenüber dem Koppelmechanismus verschiebbar ist.

In anderen Worten kann dies bedeuten, dass das Steckerelement derart in Relation zum Koppelmechanismus oder einem Teil des Koppelmechanismus gelagert ist, dass das Steckerelement relativ zu zumindest einem Teil des Koppelmechanismus um maximal +/- 0,5 mm verlagerbar ist. Durch diese relative Verlagerbarkeit kann ein gewisser Ausgleich zwischen dem Steckerelement und dem Koppelmechanismus erreicht werden. In anderen Worten kann daher das Steckerelement relativ zum Koppelmechanismus in drei senkrecht zueinander stehenden Raumrichtungen verlagert werden. Der maßgebliche Teil des Koppelmechanismus ist dabei insbesondere derjenige Teil des Koppelmechanismus, welcher direkt mit dem Antrieb verbunden ist. Beispielsweise ist der maßgebliche Teil des Koppelmechanismus bei einer Ausgestaltung, bei der der Koppelmechanismus eine Kolbenstangenverlängerung umfasst, die Kolbenstange. Alternativ oder zusätzlich bevorzugt kann das Steckerelement gerade auch derart gelagert sein, dass dieses in drei senkrecht relativ zueinander stehenden Achsen rotatorisch gegenüber dem Koppelmechanismus verschiebbar ist. In anderen Worten kann das Steckerelement nicht nur translatorisch in drei Raumrichtungen relativ zu einem maßgeblichen Teil des Koppelmechanismus verschiebbar sein, sondern auch rotatorisch. Hierdurch wird ein besonders hohes Maß an Adaptionsfähigkeit des Steckerelements erreicht, so dass dieses bei einer Kopplung mit einem Steckverbinder einer Sekundärkopplungsvorrichtung gewisse Höhen- und/oder Rotationsausrichtungsunterschiede ausgleichen kann. Hierdurch kann insbesondere auch erreicht werden, dass der Grundkörper der Primärkopplungsvorrichtung fest montiert werden kann, so dass die Primärkopplungsvorrichtung sicher beispielsweise an einer Sattelkupplungsplatte oder einem Anhänger montiert werden kann.

Ein weiterer Aspekt der Erfindung betrifft ein automatisches Kupplungssystem umfassend eine Sattelkupplungsanordnung und eine Sekundärkopplungsvorrichtung, wobei die Sekundärkopplungsvorrichtung ein Tragarm, einen Steckverbinder und ein Verdeckelement aufweist, wobei das Verdeckelement dazu ausgelegt ist, in einer Verdeckstellung den Steckverbinder abzudecken und in einer Freigabestellung bzw. Öffnungsstellung den Steckverbinder freizugeben. Die Sekundärkopplungsvorrichtung bildet daher quasi das Pendant zu der Primärkopplungsvorrichtung. Die Sekundärkopplungsvorrichtung dient daher dazu, an einem Nutzfahrzeug angeordnet zu sein, welches mit einem Nutzfahrzeug gekoppelt werden soll, an dem eine Primärkopplungsvorrichtung vorhanden ist. In anderen Worten kann dies bedeuten, dass die Primärkopplungsvorrichtung an einem Zugfahrzeug oder Anhänger angeordnet sein kann und die Sekundärkopplungsvorrichtung entsprechend an einem Anhänger oder einem Zugfahrzeug. Die Sekundärkopplungsvorrichtung verfügt über einen Tragarm zur Festlegung an einem Nutzfahrzeug. Darüber hinaus weist die Sekundärkopplungsvorrichtung auch einen Steckverbinder und ein Verdeckelement auf. Der Steckverbinder weist insbesondere energieleitende Kontakte auf, welche mit entsprechenden Energieleitkontakten des Steckerelements der Primärkopplungsvorrichtung energieleitend in Eingriff bringbar sind. Das Verdeckelement der Sekundärkopplungsvorrichtung dient dazu, den Steckverbinder derart in einer Verdeckstellung abzudecken, dass eine Steckverbindung zwischen dem Steckverbinder und dem Steckerelement einer Primärkopplungsvorrichtrung nicht möglich ist, und wobei das Verdeckelement derart in eine Freigabestellung verlagerbar ist, dass der Steckverbinder derart freigegeben ist, dass eine Steckverbindung zwischen einem Steckerelement und dem Steckverbinder möglich ist. In anderen Worten kann dies bedeuten, dass das Steckerelement den Steckverbinder derart abdeckt bzw. freigibt, dass eine Steckverbindung nicht bzw. möglich ist. Dieses Abdecken erfolgt dabei insbesondere flächig und vorteilhafterweise derart, dass sämtliche energieleitenden Kontakte des Steckverbinders in deren Erstreckungsrichtung durch das Verdeckelement in der Verdeckstellung abgedeckt sind und in der Freigabestellung bzw. Öffnungsstellung von außen sichtbar, insbesondere in die Erstreckungsrichtung der energieleitenden Kontakte, freigegeben sind. In anderen Worten kann dies bedeuten, dass bei einer Verdeckstellung des Verdeckelements die energieleitenden Kontakte des Steckverbinders nicht sichtbar sind und in der Freigabestellung sichtbar sind. Hierdurch kann erreicht werden, dass die Sekundärkopplungsvorrichtung und dessen energieleitende Kontakte gegenüber äußeren Umwelteinflüssen sicher geschützt sind.

In einer vorteilhaften Ausgestaltung der Sekundärkopplungsvorrichtung ist das Verdeckelement und/oder der Steckverbinder rotatorisch zum Tragarm, insbesondere um eine Querrichtung, gelagert, wobei vorteilhafterweise die Querrichtung in einem eingekuppelten Zustand im Wesentlichen parallel zur Rotationsachse und/oder zur Querachse ist. Die Querrichtung ist insbesondere diejenige Richtung, in welche sich die Breite des Fahrzeugs bemisst, an dem die Sekundärkopplungsvorrichtung montiert ist. Durch die rotatorische Lagerung des Steckverbinders in Relation zum Tragarm kann erreicht werden, dass eine gewisse Ausgleichsbewegung auch auf Seiten der Sekundärkopplungsvorrichtung möglich ist. Hierzu weist diese - ausgleichende - Rotierbarkeit beispielsweise zumindest eine Rotationsmöglichkeit um die Querrichtung auf. Besonders bevorzugt ist es, wenn diese Querrichtung parallel oder zu mindestens im Wesentlichen parallel zu der Rotationsachse und/oder zu der Drehachse ist. Der maßgebliche Zustand bei der Beurteilung der im Wesentlichen Parallelität der Querrichtung zu der Rotationsachse bzw. zu der Drehachse ist dabei der eingekoppelte Zustand der Primär- und der Sekundärkopplungsvorrichtung.

Vorteilhafterweise weist die Sekundärkopplungsvorrichtung, insbesondere das Verdeckelement, ein Stellstück auf, wobei das Stellstück dazu ausgelegt ist, mit einem Aktivator einer Primärkopplungsvorrichtung zu interagieren, wobei durch diese Interaktion das Verdeckelement von der Verdeckstellung in die Freigabestellung verlagerbar ist. In anderen Worten kann dies bedeuten, dass das Stellstück dazu dient, mit einem Aktivator einer Primärkopplungsvorrichtung derart zu interagieren, insbesondere durch einen unmittelbaren Kontakt, dass durch eine Annäherung der Sekundärkopplungsvorrichtung relativ zur Primärkopplungsvorrichtung eine Verlagerung des Verdeckelements von der Verdeckstellung in die Freigabestellung erreicht wird. Das Stellstück kann dabei selbst ein Teil des Verdeckelements sein oder mechanisch mit dem Verdeckelement verbunden sein. Beispielsweise kann das Stellstück seitlich an dem Verdeckelement angebracht sein.

Vorteilhafterweise weist das Stellstück dabei eine Eingriffsmulde für den Aktivator auf. In anderen Worten bedeutet dies, dass das Stellstück als ein weibliches Interaktionselement und der Aktivator als ein dementsprechend korrespondierendes männliches Interaktionselement ausgebildet sein kann.

Zweckmäßigerweise ist das Verdeckelement der Sekundärkopplungsvorrichtung eine Klappe und/oder umfasst eine Klappe. Hierdurch kann ein besonders einfaches und leichtes Verdeckelement erreicht werden. Eine Klappe ist dabei insbesondere ein Element, welches um eine Rotationsachse rotatorisch gelagert ist, wobei durch eine rotatorische Bewegung dieser Klappe die Klappe von der Verdeckstellung in die Freigabestellung verlagerbar ist. In anderen Worten kann das Verdeckelement daher eine Rotationsklappe sein. Alternativ oder zusätzlich bevorzugt kann das Verdeckelement auch als eine translatorisch verlagerbare Klappe ausgebildet sein.

Zweckmäßigerweise ist das Verdeckelement der Sekundärkopplungsvorrichtung mehrteilig ausgebildet. Kann das Verdeckelement besonders kostengünstig hergestellt werden.

Zweckmäßigerweise weist die Sekundärkopplungsvorrichtung einen Führungsdorn auf, der sowohl in der Verdeckstellung als auch in der Freigabestellung über das Abdeckelement hinaus steht. In anderen Worten kann dies bedeuten, dass der Führungsdorn sowohl in der Verdeckstellung als auch in der Freigabestellung des Verdeckelements, über dieses hinausragt. Hierdurch kann erreicht werden, dass auch in der Verdeckstellung eine sicher Interaktion des Führungsdorns mit einer Führungsstruktur erfolgen kann. Diese Führungsstruktur ist dabei insbesondere Teil einer Primärkopplungsvorrichtung. Vorteilhafterweise ist der Führungsdorn dabei zumindest teilweise rotationssymmetrisch ausgebildet, insbesondere in der Richtung, in welcher der Führungsdorn über das Verdeckelement hinaussteht.

Vorteilhafterweise ist die Sekundärkopplungsvorrichtung dabei antriebslos. Hierdurch kann eine besonders kostengünstige und leichte Sekundärkopplungsvorrichtung erreicht werden. Eine antriebslose Sekundärkopplungsvorrichtung liegt insbesondere dann vor, wenn die Sekundärkopplungsvorrichtung keinen Antrieb aufweist, um den Steckverbinder der Sekundärkopplungsvorrichtung zu verlagern.

Erfindungsgemäß ist eine Sattelkupplungsanordnung. Diese Sattelkupplungsanordnung umfasst dabei eine Primärkopplungsvorrichtung wie vorgehend und nachfolgend beschrieben, und eine Sattelkupplungsplatte, wobei die Sattelkupplungsplatte eine Aufliegerfläche aufweist, wobei die Aufliegerfläche eine nach außen weisende Normale aufweist, wobei vorteilhafterweise das Steckerelement und/oder der Grundkörper in einer Richtung senkrecht zu der Steckrichtung, insbesondere in Richtung einer Normalen der Aufliegerfläche und/oder in eine Richtung senkrecht zur Steckrichtung und zu der Normalen verschiebbar gelagert ist, insbesondere um +/- 0,5 mm. Die Sattelkupplungsanordnung weist dabei eine Primärkopplungsvorrichtung und eine Sattelkupplungsplatte auf, wobei die Primärkopplungsvorrichtung insbesondere mittel- oder unmittelbar mit der Sattelkupplungsplatte verbunden ist. Die Aufliegefläche der Sattelkupplungsplatte ist dazu ausgelegt, dass in einem eingekuppelten Zustand ein Auflieger auf dieser Aufliegerfläche aufliegt. In anderen Worten kann diese Aufliegerfläche dazu dienen, in einem eingekoppelten Zustand den Auflieger zumindest teilweise abzustützen. Vorteilhafterweise ist in einem Idealzustand die nach außen weisende Normale insbesondere im Wesentlichen parallel zu dem Vektor der Erdbeschleunigung gerichtet. In anderen Worten kann dies bedeuten, dass die Aufliegerfläche in diesem Normalzustand horizontal ausgerichtet sein kann. Vorteilhafterwiese ist das Steckerelement und/oder der Grundkörper der Primärkopplungsvorrichtung derart verschiebbar gelagert, dass diese in eine Richtung senkrecht zu der Steckrichtung, insbesondere in Richtung der nach außen weisenden Normalen der Aufliegerfläche, und/oder in eine Richtung senkrecht zur Steckrichtung und zu der Normalen verschiebbar ist. Hierdurch kann ein besonders hohes Maß an Adaptionsfähigkeit des Steckerelements und/oder des Grundkörpers erreicht werden. Maßgeblich für die Verschiebbarkeit der Lagerung ist dabei die Verschiebbarkeit des Steckerelements relativ zum Grundkörper und/oder relativ zur Sattelkupplungsplatte oder die Verschiebbarkeit des Grundkörpers relativ zur Sattelkupplungsplatte. Diese Verlagerbarkeit ist dabei insbesondere derart ausgestaltet, dass diese zumindest um +/-0,5 mm verlagerbar sein sollten. Alternativ bevorzugt oder zusätzlich bevorzugt sollte diese Verschiebbarkeit jedoch nicht größer sein als 2 mm.

Ein weiterer Aspekt der Erfindung kann ein automatisches Kupplungssystem betreffen, welches eine Primärkupplungsvorrichtung, wie vorgehend beschrieben, und eine Sattelkupplungsanordnung, wie vorgehend beschrieben, umfasst. In anderen Worten weist das automatische Kupplungssystem eine Primärkopplungsvorrichtung und eine Sekundärkopplungsvorrichtung und eine Sattelkupplungsanordnung wie vorgehend beschrieben auf.

Die obig aufgeführten Merkmale und Vorteile können daher sinngemäß auch in diesem automatischen Kupplungssystem, insbesondere für ein Nutzfahrzeug, Einsatz finden.

In einer vorteilhaften Ausbildung ist in dem automatischen Kupplungssystem das Steckerelement der Primärkopplungsvorrichtung und der Steckverbinder der Sekundärkopplungsvorrichtung derart angeordnet, dass jeweils das Steckerelement oder der Steckverbinder verlagerbar und/oder rotierbar entlang bzw. um drei Raumrichtungen sind, wobei diese drei Richtungen senkrecht zueinander stehen. In anderen Worten kann dies bedeuten, dass das Steckerelement oder der Steckverbinder dabei derart angeordnet sind, dass in der Summe der Verlagerbarkeitsrichtungen der Steckerelemente oder der Steckverbindungen jeweils zumindest das Steckerelement oder den Steckverbinder in eine Richtung verlagerbar ist, und diese Verlagerungsrichtung insgesamt drei Richtungen ausbilden, welche zueinander senkrecht stehen. Beispielsweise kann daher die Primärkopplungsvorrichtung derart ausgebildet sein, dass das Steckerelement in eine X-Richtung verlagerbar ist und der Steckverbinder in eine Y- und Z-Richtung, wobei die Y- und Z-Richtung jeweils zu der anderen Richtung und zu der X-Richtung senkrecht stehen. Zusätzlich oder alternativ bevorzugt gilt diese Anordnung der Verlagerbarkeit nicht nur für die translatorischen sondern auch für die rotatorischen Bewegungen. In anderen Worten kann daher bei einer Rotierbarkeit des Steckerelements um eine X-Achse der Steckverbinder derart ausgebildet sein, dass dieser um eine Y- und um eine Z-Achse rotierbar ist, wobei die Y- und Z-Achsen jeweils zueinander und gegenüber der X-Achse senkrecht stehen. Durch diese Art der Lagerbarkeit des Steckerelements und des Steckerverbinders kann ein besonders hohes Maß an Adaptionsfähigkeit im Hinblick auf eine Ausgleichsbewegung bei einer nicht "perfekten" Ausrichtung des Steckerelements im Vergleich zum Steckverbinder erreicht werden.

Vorteilhafterweise sind dabei Vorspannmittel, wie Federn, am Steckerelement und/oder am Steckverbinder angeordnet oder interagieren mit diesen Bestanteilen derart, dass das Steckerelement oder der Steckverbinder jeweils in deren verlagerbaren Richtungen und/oder Rotationsrichtungen durch diese Mittel in einer Zentralposition zentriert vorgespannt sind.

Weitere Vorteile und Merkmale der vorliegenden Erfindung ergeben sich aus der nachfolgenden Beschreibung mit Bezug auf die Figuren. Es zeigen:
- Figur 1: eine Seitenansicht einer Primärkopplungsvorrichtung und einer Sekundärkopplungsvorrichtung;
- Figur 2: eine parametrische Ansicht einer Primärkopplungsvorrichtung und einer Sekundärkopplungsvorrichtung;
- Figur 3: eine weitere Ansicht einer Primärkopplungsvorrichtung und einer Sekundärkopplungsvorrichtung; und
- Figur 4: eine Ansicht einer Sattelkupplungsanordnung;

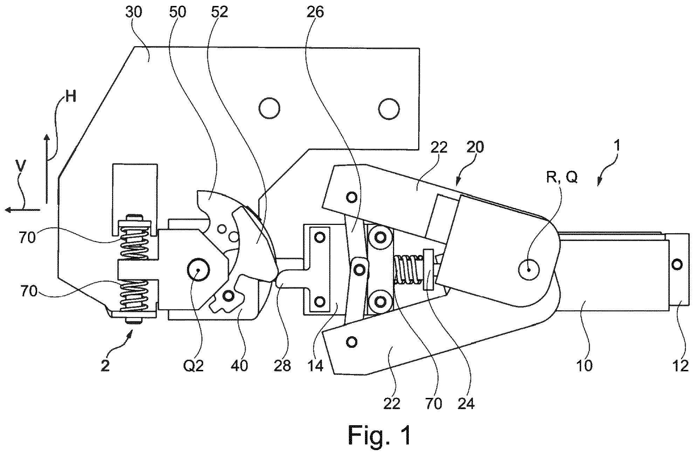

In der **Figur 1** ist eine Primärkopplungsvorrichtung 1 und eine Sekundärkopplungsvorrichtung 2 gezeigt. Die Primärkopplungsvorrichtung 1 verfügt über einen Grundkörper 10 und zumindest einen Antrieb 12, wobei der Antrieb 12 in der dargestellten Ausführungsform zumindest teilweise vom Grundkörper 10 umschlossen ist und an diesem Grundkörper 10 festgelegt ist. Der Grundkörper 10 ist dabei dazu ausgelegt, an einer Sattelkupplungsanordnung und/oder an einem Anhänger festgelegt zu sein, wobei diese Festlegung mittel- oder unmittelbar erfolgen kann. Der Antrieb 12 ist mechanisch über den Koppelmechanismus 24 mit der Abdeckvorrichtung 20 mechanisch verbunden. Der Koppelmechanismus 24 ist dabei in der in der Figur 1 dargestellten Ausführungsform durch eine Kolbenstange des Antriebs 12 und durch ein Übertragungselement und ein Vorspannmittel in Form einer Feder 70 gebildet und kontaktiert das Scherengelenk 26. Das Scherengelenk 26 weist zwei Schenkel auf, welche an einem Punkt relativ zueinander rotatorisch miteinander verbunden sind, wobei das andere Ende der Schenkel jeweils rotatorisch mit einem Abdeckelement 22 verbunden ist. Die Abdeckelemente 22 sind rotatorisch um die Drehachse Q und die Rotationsachse R gelagert. In der dargestellten Ausführungsform bilden die Abdeckelemente 22 ein Maulklappenmechanismus miteinander aus. Aus diesem Maulklappenmechanismus ist durch den Antrieb 12 und den Koppelmechanismus 24 das Steckerelement 14 in Steckrichtung V ausfahrbar. In der Figur 1 ist dabei die erste Stellung des Abdeckelements 22 gezeigt, so dass das Steckerelement 14 in der dargestellten Ausführungsform bzw. Situation freigegeben ist. Um die Abdeckelemente 22 von der - dargestellten - ersten Stellung in die - nicht dargestellte - zweite Stellung zu überführen, müssen diese Abdeckelemente 22 relativ zueinander zumindest teilweise in die Höhenrichtung H verlagert werden. Der Aktivator 28 ragt in Steckrichtung V über die Abdeckelemente 22 hinaus, nicht nur in der dargestellten ersten Stellung sondern auch in der nicht dargestellten zweiten Stellung. Der Aktivator 28 dient dazu, mit dem Stellstück 52 der Sekundärkopplungsvorrichtung 2 zu interagieren, um so eine Verlagerung des Verdeckelements 50 zu erreichen. Das Verdeckelement 50 ist dabei rotatorisch um die Querrichtung Q2 gelagert, wobei der Steckverbinder 40 der Sekundärkopplungsvorrichtung 2 in der dargestellten Ausführungsform über die Federn 70 zentrieren gegenüber dem Tragarm 30 gelagert ist. Die Querrichtung Q2 kann dabei parallel zu der Drehachse Q und/oder der Rotationsachse R sein.

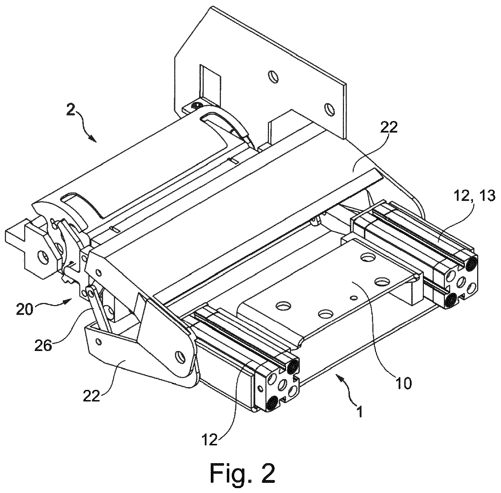

In der **Figur 2** ist eine parametrische Ansicht einer Primärkopplungsvorrichtung 1 und einer Sekundärkopplungsvorrichtung 2 kurz vor dem Einkoppeln gezeigt. Die Primärkopplungsvorrichtung 1 verfügt über einen Grundkörper 10, an welchem Antriebe 12 und 13 festgelegt sind. Die Primärkopplungsvorrichtung 1 verfügt über zwei Abdeckelemente 22, welche ein Maulklappenmechanismus bilden, welcher über ein Scherengelenk 26 betätigbar ist. Diese Betätigung erfolgt dabei derart, dass einer der Antriebe 12, 13 über einen nicht dargestellten Kopplungsmechanismus 24 mit der Abdeckvorrichtung 20 und dessen Scherengelenk 26 mechanisch interagiert.

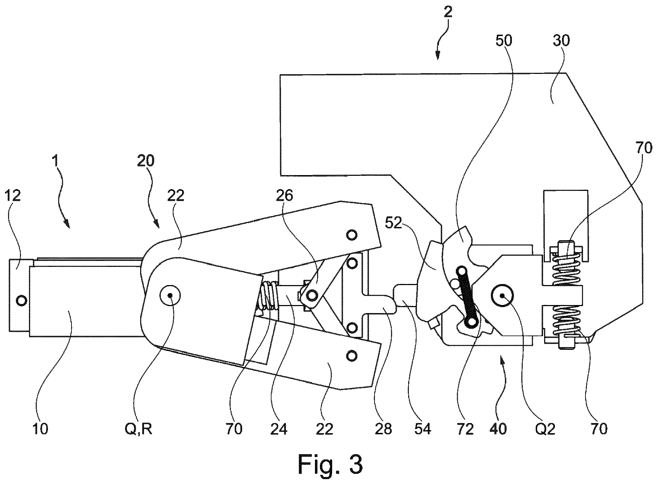

In der **Figur 3** ist eine weitere Ausgestaltung einer Primärkopplungsvorrichtung 1 und einer Sekundärkopplungsvorrichtung 2 gezeigt. Prinzipiell ähnelt diese in der Figur 3 dargestellte Ausführungsform der in der Figur 1 dargestellten Ausführungsform. Bei der in der Figur 3 dargestellten Ausführungsform ist der Kopplungsmechanismus 24 jedoch durch eine Kolbenstange gebildet, welche unmittelbar mit dem Scherengelenk 26 mechanisch interagiert. Daher ist der Kopplungsmechanismus 24 der in der Figur 3 dargestellten Ausführungsform einteilig ausgebildet. Wie der Figur 3 entnehmbar - ist das Verdeckelement 50 der Sekundärkopplungsvorrichtung 2 über ein Spannband 72 vorbespannt, so dass dieses Spannband 72 das Verdeckelement 50 in die Verdeckstellung vorspannt. In anderen Worten kann dies bedeuten, dass ohne weitere mechanische Beeinträchtigung das Spannband 72 das Verdeckelement 50 in die Verdeckstellung überführen würde. Das Stellstück 52 der Sekundärkopplungsvorrichtung 2 verfügt über eine Eingriffsmulde und Kontaktflächen, welche dazu ausgelegt sind, mit dem Aktivator 28 der Primärkopplungsvorrichtung 1 zu kontaktieren, um so eine Verlagerung des Verdeckelements 50 von der Verdeckstellung in die Freigabestellung zu erreichen. Die Sekundärkopplungsvorrichtung 2 verfügt über zumindest einen, bevorzugt eine Vielzahl, von Führungsdornen 54, welche dazu ausgelegt sind, mit Führungsstrukturen der Primärkopplungsvorrichtung 1 zu interagieren, um so eine Ausrichtung der Primärkopplungsvorrichtung 1 relativ zur Sekundärkopplungsvorrichtung 2 zu erreichen.

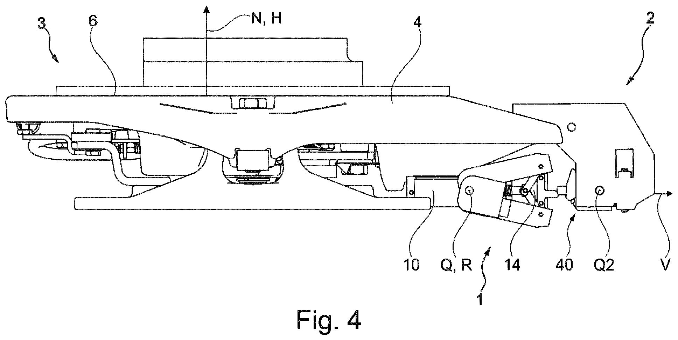

In der **Figur 4** ist eine prinzipielle Ausgestaltung einer Sattelkupplungsanordnung 3 und einer Sekundärkopplungsvorrichtung 2, sowie einer Primärkopplungsvorrichtung 1 gezeigt. In anderen Worten kann die in der Figur 4 dargestellte Ausführungsform ein automatisches Kupplungssystem darstellen. Die Sattelkupplungsanordnung 3 verfügt über eine Sattelkupplungsplatte 4, welche eine Aufliegerfläche 6 aufweist. Diese Aufliegerfläche 6 verfügt über eine nach außen weisende Normale N. In der dargestellten Ausführungsform ist diese nach außen weisende Normale N im Wesentlichen parallel zu der Höhenrichtung H. An der Sattelkupplungsanordnung 3 angeordnet ist die Primärkopplungsvorrichtung 1. Die Primärkopplungsvorrichtung 1 verfügt über einen Grundkörper 10 und ein Steckerelement 14. Dieses Steckerelement 14 dient dabei dazu, mit einem Steckverbinder 40 derart verbunden zu werden, so dass Energie zwischen der Primärkopplungsvorrichtung 1 und der Sekundärkopplungsvorrichtung 2 ausgetauscht werden kann. Die Sekundärkopplungsvorrichtung 2 ist dabei derart gestaltet, dass der Steckverbinder 40 um die Querrichtung Q2 drehbar gelagert ist.

### Bezugszeichenliste:

- 1: - Primärkopplungsvorrichtung
- 2: - Sekundärkopplungsvorrichtung
- 3: - Sattelkupplungsanordnung
- 4: - Sattelaufliegerplatte
- 6: - Aufliegerfläche
- 10: - Grundkörper
- 12: - Antrieb
- 13: - Zweiter Antrieb
- 14: - Steckerelement
- 20: - Abdeckvorrichtung
- 22: - Abdeckelement
- 24: - Koppelmechanismus
- 26: - Scherengelenk
- 28: - Aktivator
- 30: - Tragarm
- 40: - Steckverbinder
- 50: - Verdeckelement
- 52: - Stellstück
- 54: - Führungsdorn
- 70: - Feder
- 72: - Spannband
- H: - Höhenrichtung
- Q: - Drehachse
- Q2: - Querrichtung
- R: - Rotationsachse
- V: - Steckrichtung

## Patentansprüche

1. Sattelkupplungsanordnung (3) umfassend eine Primärkopplungsvorrichtung (1) und eine Sattelkupplungsplatte (4),
wobei die Sattelkupplungsplatte (4) eine Aufliegerfläche (6) aufweist,
wobei die Aufliegerfläche (6) eine nach außen weisende Normale (N) aufweist,
wobei die Sattelkupplungsplatte (4) eine Einfahröffnung aufweist,
wobei die Einfahröffnung sich in eine Einfahrrichtung erstreckt,
wobei die Primärkopplungsvorrichtung (1) einen Grundkörper (10), einen Antrieb (12), ein Koppelmechanismus (24), eine Abdeckvorrichtung (20) und ein Steckerelement (14) umfasst,
wobei der Grundkörper (10) dazu ausgelegt ist, an der Sattelkupplungsanordnung (3) und/oder dem Anhänger festgelegt zu sein,
wobei das Steckerelement (14) Energieleitkontakte aufweist, welche insbesondere in eine Steckrichtung (V) weisen,
wobei der Antrieb (12) über den Koppelmechanismus (24) mit der Abdeckvorrichtung (20) mechanisch verbunden ist,
wobei die Abdeckvorrichtung (20) zumindest ein Abdeckelement (22) aufweist,
wobei das Abdeckelement (22) durch den Antrieb (12) zwischen einer ersten Stellung und einer zweiten Stellung verlagerbar ist,
wobei in der ersten Stellung des Abdeckelements (22) das Steckerelement (14) freigegeben ist, und
wobei in der zweiten Stellung des Abdeckelements (22) das Steckerelement (14) abgedeckt ist,
**dadurch gekennzeichnet, dass** die Einfahrrichtung zumindest im Wesentlichen parallel zur Steckrichtung (V) ist.

2. Sattelkupplungsanordnung (3) gemäß Anspruch 1,
wobei das Steckerelement (14) relativ zum Grundkörper (10) mittels des Antriebs (12), insbesondere in die Steckrichtung (V), verlagerbar ist.

3. Sattelkupplungsanordnung (3) gemäß einem der vorhergehenden Ansprüche,
wobei der Koppelmechanismus (24) durch den Antrieb (12) in die Steckrichtung (V) verlagerbar ist.

4. Sattelkupplungsanordnung (3) gemäß einem der vorhergehenden Ansprüche,
wobei das Abdeckelement (22) von der ersten Stellung relativ zur zweiten Stellung zumindest teilweise in eine Höhenrichtung (H) verlagerbar ist,
wobei die Höhenrichtung (H) im Wesentlichen senkrecht auf der Steckrichtung (V) steht.

5. Sattelkupplungsanordnung (3) gemäß einem der vorhergehenden Ansprüche,
wobei die Abdeckvorrichtung (20) mehrere Abdeckelemente (22), insbesondere zwei Abdeckelemente (22), aufweist.

6. Sattelkupplungsanordnung (3) gemäß einem der vorhergehenden Ansprüche,
wobei die Abdeckvorrichtung (20), insbesondere das Abdeckelement (22) oder die Abdeckelemente (22), eine Dichtung, insbesondere eine Dichtlippe, aufweist.

7. Sattelkupplungsanordnung (3) gemäß einem der vorhergehenden Ansprüche,
wobei die Abdeckvorrichtung (20) eine Verlagerungsvorrichtung, insbesondere eine Spreizvorrichtung oder ein Scherengelenk (26) aufweist.

8. Sattelkupplungsanordnung (3) gemäß einem der vorhergehenden Ansprüche,
wobei zumindest ein Abdeckelement (22), bevorzugt alle Abdeckelemente (22), durch ein Vorspannmittel, insbesondere ein Spannband (72) und/oder eine Feder (70), in die erste oder in die zweite Stellung vorgespannt ist.

9. Sattelkupplungsanordnung (3) gemäß einem der vorhergehenden Ansprüche,
wobei die Primärkopplungsvorrichtung (1), insbesondere das Steckerelement (14), einen Aktivator (28) und/oder einen Führungsdorn aufweist, der sowohl in der ersten Stellung als auch in der zweiten Stellung in Steckrichtung (V) über zumindest ein Abdeckelement (22), bevorzugt über alle Abdeckelemente (22), hinaus steht.

10. Sattelkupplungsanordnung (3) gemäß einem der vorhergehenden Ansprüche,
wobei vorteilhafterweise das Steckerelement (14) und/oder der Grundkörper (10) in einer Richtung senkrecht zu der Steckrichtung (V), insbesondere in Richtung einer Normalen (N) der Aufliegerfläche (6) und/oder in eine Richtung senkrecht zur Steckrichtung (V) und zu der Normalen (N), verschiebbar gelagert ist,
insbesondere um +/- 0,5 mm.

11. Automatisches Kupplungssystem (4) umfassend eine Sattelkupplungsanordnung (3) gemäß einem der vorhergehenden Ansprüche und eine Sekundärkopplungsvorrichtung (2),
wobei die Sekundärkopplungsvorrichtung (2) einen Tragarm (30), einen Steckverbinder (40) und ein Verdeckelement (50) aufweist,
wobei das Verdeckelement (50) dazu ausgelegt ist, in einer Verdeckstellung den Steckverbinder (40) abzudecken und in einer Freigabestellung den Steckverbinder (40) freizugeben.

12. Automatisches Kupplungssystem (2) gemäß Anspruch 11,
wobei das Steckerelement (14) und der Steckverbinder (40) derart angeordnet sind,
dass jeweils das Steckerelement (14) oder der Steckverbinder (40) verlagerbar und/oder rotierbar entlang bzw. um drei Richtungen sind,
wobei diese drei Richtungen senkrecht zu einander stehen.

## Claims

1. Fifth wheel assembly (3) comprising a primary coupling device (1) and a fifth wheel plate (4),
wherein the fifth wheel plate (4) has a trailer surface (6),
wherein the trailer surface (6) has an outwardly facing normal (N),
wherein the fifth wheel plate (4) has an retraction opening,
wherein the retraction opening extends in a retraction direction,
wherein the primary coupling device (1) comprises a base body (10), a drive (12), a coupling mechanism (24), a cover device (20) and a plug element (14),
wherein the base body (10) is designed to be fixed to the fifth wheel assembly (3) and/or the trailer,
wherein the plug element (14) has energy conducting contacts which point in particular in a plug-in direction (V),
wherein the drive (12) is mechanically connected to the cover device (20) via the coupling mechanism (24),
wherein the cover device (20) has at least one cover element (22),
wherein the cover element (22) is displaceable by the drive (12) between a first position and a second position,
wherein in the first position of the cover element (22) the plug element (14) is released, and
wherein in the second position of the cover element (22) the plug element (14) is covered,
**characterized in that** the retraction direction is at least substantially parallel to the plug-in direction (V).

2. Fifth wheel assembly (3) according to claim 1,
wherein the plug element (14) is displaceable relative to the base body (10) by means of the drive (12), in particular in the plug-in direction (V).

3. Fifth wheel assembly according to any one of the preceding claims,
wherein the coupling mechanism (24) is displaceable in the plug-in direction (V) by the drive (12).

4. Fifth wheel assembly (3) according to any one of the preceding claims,
wherein the cover element (22) is displaceable from the first position relative to the second position at least partially in a height direction (H),
wherein the height direction (H) is substantially perpendicular to the plug-in direction (V).

5. Fifth wheel assembly (3) according to any one of the preceding claims,
wherein the cover device (20) comprises a plurality of cover elements (22), in particular two cover elements (22).

6. Fifth wheel assembly (3) according to any one of the preceding claims,
wherein the cover device (20), in particular the cover element (22) or the cover elements (22), comprise(s) a seal, in particular a sealing lip.

7. Fifth wheel assembly (3) according to any one of the preceding claims,
wherein the cover device (20) comprises a displacement device, in particular a spreading device or a scissor joint (26).

8. Fifth wheel assembly (3) according to any one of the preceding claims,
wherein at least one cover element (22), preferably all cover elements (22), is biased by a biasing means, in particular a tension band (72) and/or a spring (70), into the first or into the second position.

9. Fifth wheel assembly (3) according to any one of the preceding claims,
wherein the primary coupling device (1), in particular the plug element (14), has an activator (28) and/or a guide pin which, both in the first position and in the second position, protrudes in the plug-in direction (V) beyond at least one cover element (22), preferably beyond all cover elements (22).

10. Fifth wheel assembly (3) according to any one of the preceding claims,
wherein advantageously the plug element (14) and/or the base body (10) is displaceably mounted in a direction perpendicular to the plug-in direction (V), in particular in the direction of a normal (N) of the trailer surface (6) and/or in a direction perpendicular to the plug-in direction (V) and to the normal (N), in particular by +/- 0.5 mm.

11. Automatic coupling system (4) comprising a fifth wheel assembly (3) according to any one of the preceding claims and a secondary coupling device (2), wherein the secondary coupling device (2) comprises a support arm (30), a plug connector (40) and a cover element (50),
wherein the concealing element (50) is adapted to cover the plug connector (40) in a concealing position and to release the plug connector (40) in a release position.

12. Automatic coupling system (2) according to claim 11,
wherein the plug element (14) and the plug connector (40) are arranged in such a manner
that in each case the plug element (14) or the plug connector (40) can be displaced and/or rotated along or about three directions,
wherein these three directions are perpendicular to one another.

## Revendications

1. Ensemble de sellette d'attelage (3) comprenant un dispositif de couplage primaire (1) et un plateau de sellette d'attelage (4),
dans lequel
le plateau de sellette d'attelage (4) présente une surface d'appui de remorque (6),
la surface d'appui de remorque (6) présente une normale (N) dirigée vers l'extérieur,
le plateau de sellette d'attelage (4) présente une ouverture d'insertion,
l'ouverture d'insertion s'étendant dans une direction d'insertion,
le dispositif de couplage primaire (1) comprend un corps de base (10), un entraînement (12), un mécanisme de couplage (24), un dispositif de recouvrement (20) et un élément de connexion enfichable (14),
le corps de base (10) est conçu pour être fixé à l'ensemble de sellette d'attelage (3) et/ou à la remorque,
l'élément de connexion enfichable (14) présente des contacts conducteurs d'énergie qui sont en particulier dirigés dans une direction d'enfichage (V),
l'entraînement (12) est relié mécaniquement au dispositif de recouvrement (20) par l'intermédiaire du mécanisme de couplage (24),
le dispositif de recouvrement (20) présente au moins un élément de recouvrement (22),
l'élément de recouvrement (22) peut être déplacé par l'entraînement (12) entre une première position et une deuxième position,
dans la première position de l'élément de recouvrement (22), l'élément de connexion enfichable (14) est libéré, et
dans la deuxième position de l'élément de recouvrement (22), l'élément de connexion enfichable (14) est recouvert,
**caractérisé en ce que**
la direction d'insertion est au moins sensiblement parallèle à la direction d'enfichage (V).

2. Ensemble de sellette d'attelage (3) selon la revendication 1,
dans lequel l'élément de connexion enfichable (14) peut être déplacé par rapport au corps de base (10) au moyen de l'entraînement (12), en particulier dans la direction d'enfichage (V).

3. Ensemble de sellette d'attelage (3) selon l'une des revendications précédentes,
dans lequel le mécanisme de couplage (24) peut être déplacé dans la direction d'enfichage (V) par l'entraînement (12).

4. Ensemble de sellette d'attelage (3) selon l'une des revendications précédentes,
dans lequel l'élément de recouvrement (22) peut être déplacé au moins partiellement dans une direction de hauteur (H) de la première position par rapport à la deuxième position,
la direction de hauteur (H) est sensiblement perpendiculaire à la direction d'enfichage (V).

5. Ensemble de sellette d'attelage (3) selon l'une des revendications précédentes,
dans lequel le dispositif de recouvrement (20) comporte plusieurs éléments de recouvrement (22), en particulier deux éléments de recouvrement (22).

6. Ensemble de sellette d'attelage (3) selon l'une des revendications précédentes,
dans lequel le dispositif de recouvrement (20), en particulier l'élément de recouvrement (22) ou les éléments de recouvrement (22), comporte un joint d'étanchéité, en particulier une lèvre d'étanchéité.

7. Ensemble de sellette d'attelage (3) selon l'une des revendications précédentes,
dans lequel le dispositif de recouvrement (20) comporte un dispositif de déplacement, en particulier un dispositif d'écartement ou une articulation en ciseaux (26).

8. Ensemble de sellette d'attelage (3) selon l'une des revendications précédentes,
dans lequel au moins un élément de recouvrement (22), de préférence tous les éléments de recouvrement (22), est précontraint vers la première ou la deuxième position par un moyen de précontrainte, en particulier par une bande de serrage (72) et/ou un ressort (70).

9. Ensemble de sellette d'attelage (3) selon l'une des revendications précédentes,
dans lequel le dispositif de couplage primaire (1), en particulier l'élément de connexion enfichable (14), comporte un activateur (28) et/ou un mandrin de guidage qui, aussi bien dans la première position que dans la deuxième position, dépasse dans la direction d'enfichage (V) au-delà d'au moins un élément de recouvrement (22), de préférence au-delà de tous les éléments de recouvrement (22).

10. Ensemble de sellette d'attelage (3) selon l'une des revendications précédentes,
dans lequel avantageusement l'élément de connexion enfichable (14) et/ou le corps de base (10) est monté mobile en translation, en particulier de +/- 0,5 mm, dans une direction perpendiculaire à la direction d'enfichage (V), en particulier dans la direction d'une normale (N) à la surface d'appui de remorque (6) et/ou dans une direction perpendiculaire à la direction d'enfichage (V) et à la normale (N).

11. Système d'attelage automatique (4) comprenant un ensemble de sellette d'attelage (3) selon l'une des revendications précédentes et un dispositif de couplage secondaire (2),
dans lequel le dispositif de couplage secondaire (2) comprend un bras porteur (30), un connecteur d'enfichage (40) et un élément de masquage (50),
l'élément de masquage (50) est conçu pour recouvrir le connecteur d'enfichage (40) dans une position de masquage et pour libérer le connecteur d'enfichage (40) dans une position de libération.

12. Système d'attelage automatique (2) selon la revendication 11,
dans lequel l'élément de connexion enfichable (14) et le connecteur d'enfichage (40) sont agencés de telle sorte que l'élément de connexion enfichable (14) ou le connecteur d'enfichage (40) peuvent chacun être déplacés et/ou tournés le long ou autour de trois directions, ces trois directions étant perpendiculaires entre elles.
